# EUROPEAN PATENT APPLICATION

(11) **EP 3 702 408 A1**
(43) Date of publication of application: **02.09.2020**
(21) Application number: 19178128.5
(22) Date of filing: 04.06.2019
(51) Int. Cl.: C08L 29/04, F16L 9/12, C08L 31/04, C08L 23/04, C08L 23/26, C08K 5/053, C08K 5/098, C08K 7/14, C08K 13/04

(54) **BARRIER LAYER, MULTI-LAYER PLASTIC COMPOSITE PIPE, AND PREPARATION METHOD**

(30) Priority: 28.02.2019 CN 201910152724
(71) Applicant: Kangtai Plastic Science &Technology Group Co. Ltd., 611230 Chengdu City, Sichuan Province (CN); Sichuan University, Sichuan 610065 (CN)
(72) Inventor: ZHANG, Shuangquan, Meishan City,, Sichuan Province 620860 (CN); HAO, Hongbo, Chengdu City, 611134 (CN); ZHANG, Wenlin, Jieyang City, Guangdong Province 515499 (CN); LIN, Huihui, Chongzhou City, Sichuan Province 611230 (CN); WANG, Qi, Chengdu City, Sichuan Province 610044 (CN); LI, Li, Chengdu City, Sichuan Province 610044 (CN); NIE, Min, Chengdu City, Sichuan Province 610044 (CN)
(74) Representative: Zaboliene, Reda

(57) **Abstract**

A barrier layer comprises, by weight, 100 parts of polyvinyl alcohol, 0.5-50 parts of ethylene-vinyl alcohol copolymer, 0.25-25 parts of ethylene-vinyl acetate copolymer, 0.1-2 parts of glycerol, 0-8 parts of calcium-zinc stabilizer, 0.5-30 parts of nano glass fiber master batch, 0.5-35 parts of polyethylene and 0.5-10 parts of maleic anhydride graft copolymer. The polyvinyl alcohol serves as the main component of the barrier layer, the ethylene-vinyl alcohol copolymer, the ethylene-vinyl acetate copolymer and the nano glass fiber master batch are added to the barrier layer, and the interaction of all the components improves the processability, barrier property and flexibility of the barrier layer. Compared with existing common pipes, the barrier property of the barrier layer of the invention is improved by 3-10 times.

## Description

### TECHNICAL FIELD

The invention belongs to the technical field of pipes, in particular to a multi-layer plastic composite pipe having a barrier function.

### BACKGROUND OF THE INVENTION

Due to the fact that plastic is cheap, low in cost, resistant to aging, easy to produce and process and convenient to transport and repair, plastic pipes have nowadays been widely used in the fields of water supply, oil transportation, floor heating and the like. However, when the plastic pipes such as polypropylene pipes are mounted in places in contact with paint, the barrier property of the pipes may be reduced, smells of the paint enter the pipes, and consequentially, water in the pipes is contaminated. The barrier property of polyethylene oil delivery pipes may become poor in use, and consequentially, petroleum penetrates into soil, which in turn contaminates underground water resources. In the long-term service process of common floor heating pipes, metal components may be corroded due to the poor barrier property of the pipes, which in turn results in a short service life of pipe systems. Ethylene-vinyl alcohol copolymers used for preparing an oxygen barrier layer of existing oxygen-barrier floor heating pipes are high in cost. Due to the poor oxygen barrier property of existing water supply pipes, harmful microorganisms easily breed in these pipes; and meanwhile, these pipes can be easily oxidized and thus have a short service life.

### SUMMARY OF THE INVENTION

One objective of the invention is to provide a barrier layer which is applied to pipes to remarkably improve the barrier property of the pipes and to fulfill oxygen barrier and permeation prevention functions. The rigidity and tenacity of the barrier layer are superior to those of pure polyvinyl alcohol or ethylene-vinyl alcohol copolymers, and the barrier layer has good tear resistance and cold resistance.

According to the technical solution adopted by the invention to fulfill the above objective, a barrier layer comprises, by weight, the following raw materials:
100 parts of polyvinyl alcohol;
0.5-50 parts of ethylene-vinyl alcohol copolymer;
0.5-25 parts of ethylene-vinyl acetate copolymer;
0.1-2 parts of glycerol;
0-8 parts of calcium-zinc stabilizer;
0.5-30 parts of nano glass fiber master batch;
0.5-35 parts of polyethylene; and
0.5-10 parts of maleic anhydride grafted copolymer.

The polyvinyl alcohol added to the barrier layer has a good oil resistivity and good barrier property, while the processability of pure polyvinyl alcohol is poor. Ethylene-vinyl alcohol has good processability, and the ethylene-vinyl alcohol copolymer and the polyvinyl alcohol are mutually dissolved, so that the capacity is improved. Meanwhile, the ethylene-vinyl alcohol also has a barrier property and improves the processability of the polyvinyl alcohol. In order to prevent the reduction of the barrier property caused by excessive addition of the ethylene-vinyl alcohol, the number of parts by weight of the ethylene-vinyl alcohol is controlled to 0.5-50; and meanwhile, the processability and the barrier property are good.

The ethylene-vinyl acetate copolymer improves the tenacity of the polyvinyl alcohol and is compatible with the polyvinyl alcohol and polyethylene, so that the capacity is improved. The flexibility of the barrier layer is improved under the combined action of the polyethylene and the ethylene-vinyl acetate copolymer.

The glycerol serves as a solvent to improve the processability of the barrier layer. However, too much glycerol will lead to an excessively high fluidity of molten raw materials, which in turn results in a low density and low strength of the barrier layer and reduces the barrier property of the barrier layer.

The nano glass fiber master batch added to the barrier layer improves the rigidity of the barrier layer, also improves the barrier property of the barrier layer and keeps the barrier layer isotropic by changing the orientation.

Preferably, the barrier layer comprises, by weight, the following raw materials:
100 parts of polyvinyl alcohol;
5 parts of ethylene-vinyl alcohol copolymer;
5 parts of ethylene-vinyl acetate copolymer;
2 parts of glycerol;
0.8 part of calcium-zinc stabilizer;
15 parts of nano glass fiber master batch;
5 parts of polyethylene; and
1 part of maleic anhydride grafted copolymer.

Preferably, the barrier layer comprises, by weight, the following raw materials:
100 parts of polyvinyl alcohol;
8 parts of ethylene-vinyl alcohol copolymer;
5 parts of ethylene-vinyl acetate copolymer;
1 part of glycerol;
0.8 part of calcium-zinc stabilizer;
5 parts of nano glass fiber master batch;
5 parts of polyethylene; and
2 parts of maleic anhydride grafted copolymer.

Preferably, the barrier layer comprises, by weight, the following raw materials:
100 parts of polyvinyl alcohol;
50 parts of ethylene-vinyl alcohol copolymer;
5 parts of ethylene-vinyl acetate copolymer;
0.5 part of glycerol;
0.1 part of calcium-zinc stabilizer;
1.0 part of nano glass fiber master batch;
5 parts of polyethylene; and
1 part of maleic anhydride grafted copolymer.

Furthermore, the maleic anhydride grafted copolymer is any one or a mixture of more than one selected from a polyethylene (PE) maleic anhydride grafted copolymer, a polypropylene (PP-R) maleic anhydride grafted copolymer and a polyethylene of raised temperature resistance (PE-RT) maleic anhydride grafted copolymer.

A second objective of the invention is to provide a plastic composite pipe having a good barrier property. The plastic composite pipe is provided with the barrier layer and can be applied to the fields of petroleum transportation, water supply, floor heating and the like. Compared with pipes in the prior art, the barrier property of the plastic composite pipe is improved by 3-10 times. According to the technical solution adopted by the invention to fulfill the above objective, a multi-layer plastic composite pipe comprises a pressure-bearing layer, a bonding layer and a barrier layer, wherein the bonding layer is located between the pressure-bearing layer and the barrier layer, and the barrier layer is any one of the barrier layers mentioned above. Furthermore, the composite pipe may comprise a plurality of pressure-bearing layers, a plurality of barrier layers and a plurality of bonding layers, wherein the pressure-bearing layers, the bonding layers and the barrier layers are alternately arranged. Particularly, the composite pipe sequentially comprises a pressure-bearing layer, a bonding layer, a barrier layer, a bonding layer and a pressure-bearing layer from inside to outside. In actual production, the number of layers of the composite pipe can be reasonably designed according to actual requirements, and the barrier layer is an innermost layer, an outermost layer or a middle layer.

Furthermore, the composite pipe sequentially comprises a barrier layer, a bonding layer and a pressure-bearing layer from inside to outside.

Furthermore, the composite pipe sequentially comprises a pressure-bearing layer, a bonding layer and a barrier layer from inside to outside.

Furthermore, the pressure-bearing layer is made from any one selected from polypropylene random copolymer (PP-R), polyethylene (PE), PE-RT and polybutylene (PB).

Furthermore, the bonding layer is made from a maleic anhydride grafted copolymer, which is any one or a mixture of more than one selected from a PE maleic anhydride grafted copolymer, a PP-R maleic anhydride grafted copolymer and a PE-RT maleic anhydride grafted copolymer. In the invention, the bonding layer is mainly used for bonding the barrier layer and the pressure-bearing layer, the pressure-bearing layer is mainly used for providing certain strength, and accordingly, the barrier layer is mainly used for realizing barrier and isolation effects. When the barrier layer serves an outer layer frequently making contact with water, a cross-linking agent and an antioxidant can be added to the barrier layer to prevent the barrier layer against hydrolysis.

The third objective of the invention is to provide a preparation method of the multi-layer plastic composite pipe mentioned above. The plastic composite pipe prepared from the method according to the raw material formula of the barrier layer is good in barrier property, good in impermeability and low in production cost.

According to the technical solution adopted by the invention to fulfill the above objective, the preparation method of the multi-layer plastic composite pipe is characterized by comprising the following steps:
S1, extruding, by a multi-layer co-extruder, a barrier layer, a bonding layer and a pressure-bearing layer;
S2, co-extruding the barrier layer, the bonding layer and the pressure-bearing layer out of a head of the multi-layer co-extruder; and
S3, conducting drawing, cutting, cooling to the room temperature, and baking to obtain the composite pipe.

Furthermore, when the barrier layer is extruded, a cylinder of the co-extruder has a first stage temperature of 175°C-185°C, a second stage temperature of 185°C-195°C and a third stage temperature of 195°C-200°C.

Furthermore, when the pressure-bearing layer is extruded, the cylinder of the co-extruder has a first stage temperature of 160°C-185°C, a second stage temperature of 185°C-190°C, a third stage temperature of 190°C-200°C and a fourth stage temperature of 200°C-210°C. Furthermore, when the barrier layer, the bonding layer and the pressure-bearing layer are co-extruded, the cylinder of the co-extruder has a first stage temperature of 180°C-185°C, a second stage temperature of 185°C-210°C and a third stage temperature of 210°C-220°C.

Furthermore, when the bonding layer is extruded, the cylinder of the co-extruder has a first stage temperature of 175°C-185°C, a second stage temperature of 185°C-195°C and a third stage temperature of 195°C-200°C.

Furthermore, drawing is conducted at a speed of 1-50m/min.

Furthermore, baking is conducted at a temperature of 60-120°C for 0.15-4h. Stress and moisture in the composite pipe are eliminated by baking, and after baking, the compressive strength of the composite pipe is improved by over 10%.

By adoption of the above technical solutions, the invention has the following beneficial effects: the polyvinyl alcohol serves as the main component of the barrier layer, the ethylene-vinyl alcohol copolymer, the ethylene-vinyl acetate copolymer and the nano glass fiber master batch are added to the barrier layer, and the interaction of all the components improves the processability, barrier property and flexibility of the barrier layer. Compared with existing common pipes, the barrier property of the barrier layer of the invention is improved by 3-10 times.

The plastic composite pipe of the invention comprises a barrier layer, a bonding layer and a pressure-bearing layer, wherein the barrier layer and the pressure-bearing layer are connected through the bonding layer, the barrier layer is used for realizing barrier and isolation effects, the pressure-bearing layer provides certain strength, and under the combined action of the barrier layer and the pressure-bearing layer, the plastic composite pipe has high strength and a good barrier property; and to fulfill the same barrier effect, the barrier layer of the invention is thinner than pipe barrier layers in the prior art. Under the same thickness, the barrier layer of the invention has a barrier property obviously superior to that of the barrier layers in the prior art. When used as a water supply pipe, the plastic composite pipe of the invention can effectively isolate outside oxygen to prevent harmful microorganisms from breeding in the pipe. The plastic composite pipe of the invention can also be used as an oil delivery pipe, a floor heating pipe or the like.

The plastic composite pipe has a low production cost and a good barrier property, thereby being widely applied to various fields.

### DETAILED DESCRIPTION OF THE INVENTION

The ratio of raw materials of the barrier layer in different embodiments is shown in Table 1.

**Table 1: Ratio of raw materials (parts by weight) of the barrier layer in embodiments 1-6**

| | Polyvinyl alcohol | Ethylene-inyl alcohol copolymer | Ethylene-inyl acetate copolymer | Glycerol | Calcium-zinc stabilizer | Nano glass fiber master batch | Polyethylene | Maleic anhydride grafted copolymer |
|---|---|---|---|---|---|---|---|---|
| Embodiment 1 | 100 | 5 | 5 | 2 | 0.8 | 15 | 5 | 1 |
| Embodiment 2 | 100 | 8 | 5 | 1 | 0.8 | 5 | 5 | 2 |
| Embodiment 3 | 100 | 50 | 5 | 0.5 | 0.1 | 1 | 5 | 1 |
| Embodiment 4 | 100 | 0.5 | 10 | 1.5 | 0.5 | 30 | 0.5 | 10 |
| Embodiment 5 | 100 | 20 | 25 | 0.1 | 5 | 10 | 20 | 5 |
| Embodiment 6 | 100 | 30 | 0.5 | 2 | 8 | 0.5 | 35 | 0.5 |

What should be pointed out is that: in Table 1, the maleic anhydride grafted copolymer in embodiment 1 is a PP-R maleic anhydride grafted copolymer; the maleic anhydride grafted copolymer in embodiment 2 is a PE maleic anhydride grafted copolymer; the maleic anhydride grafted copolymer in embodiment 3 is a PE-RT maleic anhydride grafted copolymer; the maleic anhydride grafted copolymer in embodiment 4 is a mixture of the PP-R maleic anhydride grafted copolymer and the PE maleic anhydride grafted copolymer; the maleic anhydride grafted copolymer in embodiment 5 is a mixture of the PE maleic anhydride grafted copolymer and the PE-RT maleic anhydride grafted copolymer; and the maleic anhydride grafted copolymer in embodiment 6 is the PE-RT maleic anhydride grafted copolymer.

The polyvinyl alcohol in the barrier layer of the invention has an ultrahigh degree of polymerization (molecular weight of 250,000-300,000) and has a polar group, high surface energy and a small molecular gap.

### Embodiment 1: PP-R water supply pipe

Raw materials of a barrier layer are evenly mixed; the PP-R maleic anhydride grafted copolymer is prepared, and 2% of red master batch is added to the PP-R maleic anhydride grafted copolymer and is then evenly stirred and mixed at a normal temperature to form a bonding layer; afterwards, PP-R resin is prepared, and 2% of white master batch is added to the PP-R resin to form a pressure-bearing layer; the barrier layer is extruded under a first stage temperature of 175°C, a second stage temperature of 185°C and a third stage temperature of 175°C; the pressure-bearing layer is extruded under a first stage temperature of 170°C, a second stage temperature of 185°C, a third stage temperature of 190°C and a fourth stage temperature of 200°C; the bonding layer is extruded under a first stage temperature of 175°C, a second stage temperature of 185°C and a third stage temperature of 195°C; the barrier layer, the bonding layer and the pressure-bearing layer are co-extruded out of an extruder head under a first stage temperature of 180°C, a second stage temperature of 185°C and a third stage temperature of 210°C, are drawn at the extruder head at a speed of 2m/min and are then cut and cooled to the room temperature, so that a composite pipe blank is obtained; and finally, the composite pipe blank is baked at a temperature of 80°C for 30min, so that a first plastic composite pipe is prepared.

In this embodiment, a main body (the pressure-bearing layer) of the plastic composite pipe is made from PP-R, so that the composite plastic pipe can serve as a water supply pipe to be installed on indoor, outdoor or other places in contact with paint and chemical materials, so as to effectively prevent other components from permeating into the pipe, which may otherwise pollute water in the pipe. Compared with existing pipes using a pure ethylene-vinyl alcohol copolymer as a barrier layer, the barrier property of the pipe in this embodiment is improved by 60%, and the impermeability of the pipe is improved 60%.

In this embodiment, the barrier layer serves as an outermost layer and has a thickness of 0.12mm, and the composite pipe has an outer diameter of 20mm and a wall thickness of 2.3mm. This embodiment is also applicable to a PB pipe by preparing a barrier layer from PB.

### Embodiment 2: PE petroleum pipe

Raw materials of a barrier layer are evenly mixed; the PE maleic anhydride grafted copolymer is prepared, and 2% of red master batch is added to the PE maleic anhydride grafted copolymer and is then evenly stirred and mixed at a normal temperature to form a bonding layer; afterwards, PE resin 100 is prepared to serve as a pressure-bearing layer; the barrier layer is extruded under a first stage temperature of 175°C, a second stage temperature of 185°C and a third stage temperature of 195°C; the pressure-bearing layer is extruded under a first stage temperature of 168°C, a second stage temperature of 185°C and a third stage temperature of 195°C; the bonding layer is extruded under a first stage temperature of 180°C, a second stage temperature of 185°C and a third stage temperature of 200°C; the barrier layer, the bonding layer and the pressure-bearing layer are co-extruded out of an extruder head under a first stage temperature of 180°C, a second stage temperature of 185°C and a third stage temperature of 212°C, are drawn at the extruder head at a speed of 1m/min and are then cut and cooled to the room temperature, so that a composite pipe blank is obtained; and finally, the composite pipe blank is baked at a temperature of 80°C for 45min, so that a second plastic composite pipe is prepared.

In this embodiment, the barrier layer serves as an inner layer of the composite pipe and has a wall thickness of 2mm, and the composite pipe has an outer diameter of 110mm and a wall thickness of 8.2mm. The plastic composite pipe in this embodiment can serve as an oil delivery pipe in the petroleum transportation field. Compared with existing pipes using an ethylene-vinyl alcohol copolymer as a barrier layer, the oil resistivity of the composite pipe in this embodiment is improved by 200%, and the barrier property of the composite pipe is improved 60%.

### Embodiment 3: PE-RT oxygen-barrier pipe

Raw materials of a barrier layer are evenly mixed; the PE-RT maleic anhydride grafted copolymer is prepared, and 2% of red master batch is added to the PE maleic anhydride grafted copolymer and is then evenly stirred and mixed at a normal temperature to form a bonding layer; afterwards, PE-RT resin is prepared to serve as a pressure-bearing layer; the barrier layer is extruded under a first stage temperature of 175°C, a second stage temperature of 185°C and a third stage temperature of 195°C; the pressure-bearing layer is extruded under a first stage temperature of 160°C, a second stage temperature of 175°C and a third stage temperature of 190°C; the bonding layer is extruded under a first stage temperature of 180°C, a second stage temperature of 185°C and a third stage temperature of 190°C; the barrier layer, the bonding layer and the pressure-bearing layer are co-extruded out of an extruder head under a first stage temperature of 180°C, a second stage temperature of 185°C and a third stage temperature of 200°C, are drawn at the extruder head at a speed of 12m/min and are then cut and cooled to the room temperature, so that a composite pipe blank is obtained; and finally, the composite pipe blank is baked at a temperature of 75°C for 40min, so that a third plastic composite pipe is prepared.

In this embodiment, the barrier layer serves as an inner layer of the composite pipe and has a wall thickness of 0.15mm, and the composite pipe has an outer diameter of 20mm and a wall thickness of 2mm. The composite plastic pipe in this embodiment can be used in oxygen-barrier environments. Compared with existing PE-RT oxygen-barrier pipes using an ethylene-vinyl alcohol copolymer as a barrier layer, the cost of an oxygen barrier layer of the composite pipe in this embodiment is reduced by 50%, the oxygen barrier capacity of the composite pipe is improved 35%, the tear strength is improved 100%, and the pipe yield is high.

Embodiment 4: the pipe preparation method in this embodiment adopts the same parameters as embodiment 1 and differs from embodiment 1 in the following aspects: in this embodiment, the ratio of raw materials of the barrier layer is different, the maleic anhydride grafted copolymer in the barrier layer is the mixture of the PP-R maleic anhydride grafted copolymer and the PE maleic anhydride grafted copolymer. This embodiment is identical with embodiment 1 in other aspects.

Compared with existing pipes using a pure ethylene-vinyl alcohol copolymer as a barrier layer, the barrier property of the PP-R water supply pipe prepared in embodiment 4 is improved by 85%; and compared with other common pipes, the impermeability of the PP-R water supply pipe in this embodiment is improved by 9 times.

Embodiment 5: this embodiment differs from embodiment 2 in the following aspects: in this embodiment, the ratio of raw materials of the barrier layer is different, and the maleic anhydride grafted copolymer in the barrier layer in this embodiment is the mixture of the PE maleic anhydride grafted copolymer and the PE-RT maleic anhydride grafted copolymer. The preparation method and other parameters in this embodiment are identical with those in embodiment 2.

The composite pipe in this embodiment can be used as an oil delivery pipe in the petroleum transportation field. Compared with existing pipes using a pure ethylene-vinyl alcohol copolymer as a barrier layer, the petroleum impermeability of the composite pipe in this embodiment is improved by 120%, and the barrier property of the composite pipe is improved by 76%.

Embodiment 6: this embodiment differs from embodiment 3 in that the ratio of raw materials of the barrier layer is different. The preparation method and other parameters in this embodiment are identical with those in embodiment 2.

The composite pipe in this embodiment is used in an oxygen-barrier environment. Compared with PE-RT oxygen-barrier pipes using a pure ethylene-vinyl alcohol copolymer as a barrier layer, the cost of the barrier layer of the composite pipe in this embodiment is reduced 50%, the oxygen barrier capacity is improved by 50%, the tear strength is improved by 80%, and the pipe yield is high.

In other embodiments of the invention, the specific number of layers of the pipe can be designed according to actual service environments. For instance, the pipe may comprise five layers which are sequentially a pressure-bearing layer, a bonding layer, a barrier layer, a bonding layer and a pressure-bearing layer. The pipe can also comprise other numbers of layers, and the position of the barrier layer can be reasonably adjusted according to actual requirements. In the invention, the thickness of the barrier layer can be selected according to actual requirements. The barrier layer of the invention has a good barrier property while having a small thickness, thereby reducing the production cost.

The barrier layer of the invention can be used in cooperation with pipes made from other materials in the prior art. A functional additive such as an antioxidant, a certain quantity of aqueous hydrochloric acid solution having a concentration of 5-15%, or pure water can be added to the barrier layer according to actual service environments, so as to improve the processability of the barrier layer.

Experimental example 1:
upon the preparation method and parameters in embodiment 1, a composite pipe comprising the barrier layer having different thicknesses was prepared according to the formula in embodiment 1, and a composite pipe comprising a barrier layer made from a pure ethylene-vinyl alcohol copolymer and having different thicknesses was also prepared. The barrier property of these pipes is detected through a national standard detection method, and test results are shown in the following Table:

**Table 2: Barrier property of barrier layers with different thicknesses**

| | Barrier layer in embodiment 1 | | | Barrier layer in comparative example | | | PPR pipe | | |
|---|---|---|---|---|---|---|---|---|---|
| Thickness | 0.12 | 0.2 | 0.3 | 0.12 | 0.2 | 0.3 | 0.12 | 0.2 | 0.3 |
| Oxygen permeability | 0.041 | 0.035 | 0.031 | 0.053 | 0.049 | 0.037 | 0.062 | 0.057 | 0.043 |

In the above table, the thickness unit of the barrier layer is mm, and the unit of oxygen permeability is g/ (d. m)³. As can be seen from the above table, the oxygen permeability of the water supply pipe in embodiment 1 is much smaller than that of a water supply pipe in comparative example 1, and to realize the same oxygen permeability, the barrier layer of the pipe in embodiment 1 has a much smaller thickness.

Experimental example 1:
the pipes in embodiments 1-6 were made into samples having a length of 50mm and a width of 2mm. A folding test was carried out on each sample by repeatedly folding the sample, the folding times of each sample before layer separation were recorded, and test results are shown in the following table.

**Table 3: Bonding strength of embodiments 1-6**

| | Embodiment 1 | Embodiment 2 | Embodiment 3 | Embodiment 4 | Embodiment 5 | Embodiment 6 |
|---|---|---|---|---|---|---|
| Times | 19 | 31 | 21 | 27 | 33 | 25 |

After the sample in embodiment 1 is folded for 20 times, the barrier layer and the bonding layer of the sample are separated. After the sample in embodiment 2 is folded for 32 times, the pressure-bearing layer and the bonding layer of the sample are separated, and cracks appear between the barrier layer and the bonding layer. In embodiment 3, the bonding layer and the barrier layer are separated. In embodiment 4, the bonding layer and the barrier layer are separated. In embodiments 4, 5 and 6, the bonding layer and the barrier layer are separated. As can be seen from the above table, the bonding layer and the barrier layer are firmly connected, and the bonding layer and the pressure-bearing layer are also firmly connected, in the invention.

Experimental example 1:
upon the preparation method in embodiment 2, a composite pipe comprising a barrier layer having different thicknesses was prepared according to the formula in embodiment 2, and a composite pipe comprising a barrier layer made from a pure ethylene-vinyl alcohol copolymer and having different thickness (comparative example) was also prepared. The barrier property of these pipes is detected through a national standard detection method. Detection results are shown in the following table:

**Table 3: Barrier property of barrier layers with different thicknesses**

| | Barrier layer in embodiment 3 | | | Barrier layer in comparative example | | | PE pipe | | |
|---|---|---|---|---|---|---|---|---|---|
| Thickness | 2 | 3 | 4 | 2 | 3 | 4 | 2 | 3 | 4 |
| Oxygen permeability | 0.022 | 0.016 | 0.005 | 0.035 | 0.041 | 0.031 | 0.042 | 0.045 | 0.035 |

In the above table, the thickness unit of the barrier layer is mm, and the unit of oxygen permeability is g/ (d. m)³. As can be seen from the above table, the PE petroleum pipe provided with the barrier layer in the invention has a lower oxygen permeability and a good barrier property and can obviously reduce pollution to soil and underground water when applied to a petroleum transportation pipeline.

Experimental example 1:
the composite pipes in embodiments 1-6 were made into samples. The mechanical properties of the pipes in these embodiments are tested, and test results are shown in the following table:

**Table 4: Mechanical properties of pipes**

| | Embodiment 1 | Embodiment 2 | Embodiment 3 | Embodiment 4 | Embodiment 5 | Embodiment 6 |
|---|---|---|---|---|---|---|
| Tensile strength | 27.8 MPa | 27.2 MPa | 27.3 MPa | 28 MPa | 27.6 MPa | **27.2** MPa |
| Hydraulic performance | qualified improved by 11% | qualified improved by 10% | qualified improved by 10% | qualified improved by 12% | qualified improved by 10.7% | qualified improved by 10% |
| 0°C low-temperature impact | hammer weight 5.0kg no crack | hammer weight 15kg no crack | hammer weight 10kg no crack | hammer weight 3.0kg no crack | hammer weight 15kg no crack | hammer weight 10kg no crack |

During the 0°C low-temperature impact test, an existing PP-R water supply pipe which has the same thickness as the PP-R water supply pipe in embodiment 1 cracks when impacted with a hammer weight of 2.8kg. As can be seen from the above table, the tensile strength, low-temperature performance and hydraulic performance of the pipe in the invention are improved while the barrier property of the pipe is improved.

## Claims

1. A barrier layer, comprising, by weight, the following raw materials: 100 parts of polyvinyl alcohol;
0.5-50 parts of ethylene-vinyl alcohol copolymer;
0.5-25 parts of ethylene-vinyl acetate copolymer;
0.1-2 parts of glycerol;
0-8 parts of calcium-zinc stabilizer;
0.5-30 parts of nano glass fiber master batch;
0.5-35 parts of polyethylene; and
0.5-10 parts of maleic anhydride grafted copolymer.

2. The barrier layer according to claim 1, wherein the barrier layer comprises, by weight, the following raw materials:
100 parts of polyvinyl alcohol;
5 parts of ethylene-vinyl alcohol copolymer;
5 parts of ethylene-vinyl acetate copolymer;
2 parts of glycerol;
0.8 part of calcium-zinc stabilizer;
15 parts of nano glass fiber master batch;
5 parts of polyethylene; and
1 part of maleic anhydride grafted copolymer.

3. The barrier layer according to claim 1, wherein the barrier layer comprises, by weight, the following raw materials:
100 parts of polyvinyl alcohol;
8 parts of ethylene-vinyl alcohol copolymer;
5 parts of ethylene-vinyl acetate copolymer;
1 part of glycerol;
0.8 part of calcium-zinc stabilizer;
5 parts of nano glass fiber master batch;
5 parts of polyethylene; and
2 parts of maleic anhydride grafted copolymer.

4. The barrier layer according to claim 1, wherein the barrier layer comprises, by weight, the following raw materials:
100 parts of polyvinyl alcohol;
50 parts of ethylene-vinyl alcohol copolymer;
5 parts of ethylene-vinyl acetate copolymer;
0.5 part of glycerol;
0.1 part of calcium-zinc stabilizer;
1.0 part of nano glass fiber master batch;
5 parts of polyethylene; and
1 part of maleic anhydride grafted copolymer.

5. The barrier layer according to any one of claims 1-4, wherein the maleic anhydride grafted copolymer is any one or a mixture of more than one selected from a polyethylene maleic anhydride grafted copolymer, a polypropylene maleic anhydride grafted copolymer and a polyethylene of raised temperature resistance maleic anhydride grafted copolymer.

6. A multi-layer plastic composite pipe, comprising a pressure-bearing layer, a bonding layer and a barrier layer according to any one of claims 1-5, wherein the bonding layer is located between the pressure-bearing layer and the barrier layer.

7. The multi-layer plastic composite pipe according to claim 6, wherein the bonding layer is made from a maleic anhydride grafted copolymer.

8. A preparation method of the multi-layer plastic composite pipe according to any one of claims 6-7, wherein the preparation method comprises the following steps:
s1, extruding, by a multi-layer co-extruder, a barrier layer, a bonding layer and a pressure-bearing layer;
s2, co-extruding the barrier layer, the bonding layer and the pressure-bearing layer out of a head of the multi-layer co-extruder; and
s3, conducting drawing, cutting, cooling to the room temperature, and baking to obtain the composite pipe.

9. The preparation method of the multi-layer plastic composite pipe according to claim 8, wherein drawing is conducted at a speed of 1-50m/mm.

10. The preparation method of the multi-layer plastic composite pipe according to claim 8, wherein braking is conducted at a temperature of 60-120°C for 0.15-4h.
